# EUROPÄISCHE PATENTSCHRIFT

(11) **EP 3 727 775 B1**
(45) Veröffentlichungstag und Bekanntmachung des Hinweises auf die Patenterteilung: **08.05.2024**
(21) Anmeldenummer: 18814615.3
(22) Anmeldetag: 11.12.2018
(51) Int. Cl.: B23B 51/04, B28D 1/04

(54) **SCHNEIDABSCHNITT FÜR EINE BOHRKRONE**
CUTTING SECTION FOR A CORE BIT
SECTION DE COUPE POUR UNE COURONNE DE PERÇAGE

(30) Priorität: 21.12.2017 EP 17209642
(43) Veröffentlichungstag der Anmeldung: 28.10.2020
(73) Patentinhaber: Hilti Aktiengesellschaft, 9494 Schaan (LI)
(72) Erfinder: SCHROEDER, Florian, 7304 Maienfeld (CH); DOMANI, Guenter, 88138 Weissensberg (DE); RONG, Pingyan, 6800 Feldkirch (AT)
(74) Vertreter: Hilti Aktiengesellschaft Corporate Intellectual Property
(86) Internationale Anmeldenummer: PCT/EP2018/084291
(87) Internationale Veröffentlichungsnummer: WO 2019/121141

(56) Entgegenhaltungen:
- WO-A1-2014/096359
- WO-A1-2017/108461
- DE-A1- 10 321 863
- DE-A1- 19 810 713
- DE-U1- 20 306 797
- GB-A- 1 583 860
- GB-A- 191 405 302

## Beschreibung

### Technisches Gebiet

Die vorliegende Erfindung betrifft einen Schneidabschnitt für eine Bohrkrone gemäß dem Oberbegriff des Anspruchs 1.

### Stand der Technik

Als Aufbau für Schneidabschnitte, die mit einem Bohrschaftabschnitt über eine lösbare Verbindungseinrichtung verbindbar sind, hat sich der in WO 2014/096359 A1 beschriebene Aufbau etabliert. Der nach dem Oberbegriff des Anspruchs 1 ausgebildete Schneidabschnitt umfasst ein oder mehrere Bohrsegmente, einen Ringabschnitt, ein äusseres Steckelement und am Übergang vom Ringabschnitt zum äusseren Steckelement eine ringförmige Anschlagschulter; die lösbare Verbindungseinrichtung ist als kombinierte Steck-Dreh-Verbindung ausgebildet. Der Schneidabschnitt umfasst schlitzförmige Ausnehmungen in T-Form, die im äusseren Steckelement angeordnet sind.

Beim Bohren von Untergründen aus armiertem Beton tritt das Problem von verklemmten Bohrkronen auf. Ursache für das Verklemmen der Bohrkrone kann ein Eisenkeil sein, der an der Innenseite des Schneidabschnittes abgetrennt wird und sich im Innenspalt zwischen dem Bohrkern und dem Schneidabschnitt verkeilt. Aus WO 2014/108461 A1 ist bekannt, dass bei Bohrkronen mit einem geringen Innenüberstand der Bohrsegmente gegenüber dem Bohrschaft, das Risiko reduziert ist, dass sich der Schneidabschnitt einer Bohrkrone im Untergrund verklemmt. Ein geringer Innenüberstand der Bohrsegmente führt allerdings zu einem schmalen Innenspalt an der Innenseite der Bohrkrone und damit zu Nachteilen beim Nassbohren mit der Bohrkrone. Beim Nassbohren ist eine Kühl- und Spülflüssigkeit erforderlich, die als Kühlflüssigkeit die Bohrsegmente kühlt und als Spülflüssigkeit Bohrklein aus dem Bohrloch abtransportiert. Dabei wird die saubere Kühl- und Spülflüssigkeit über den Innenspalt zwischen dem Bohrkern und der Bohrkrone zugeführt. Über den schmalen Innenspalt kann nicht ausreichend Kühl- und Spülflüssigkeit an die Bearbeitungsstelle transportiert werden.

Die WO 2014/108461 A1 beschreibt als Massnahmen zur Verbesserung der Flüssigkeitszufuhr der Kühl- und Spülflüssigkeit bei Bohrkronen mit einem geringen Innenüberstand der Bohrsegmente die Verwendung von Transportkanälen auf der Innenseite des Bohrschaftes oder die Verwendung von Bohrschäften mit einer wellenförmigen, trapezförmigen oder zickzackförmigen Querschnittsfläche.

Bei Bohrkronen mit einem lösbaren Schneidabschnitt können Transportkanäle die Flüssigkeitszufuhr verbessern. Den aus WO 2014/096359 A1 bekannten Schneidabschnitt mit kreisringförmiger Querschnittsfläche durch einen Schneidabschnitt mit wellenförmiger, trapezförmiger oder zickzackförmiger Querschnittsfläche zu ersetzen, ist nachteilig.

DE 203 06 797 U1 offenbart eine Hohlbohrkrone, die ein erstes geschlossenes Rohrelement, ein zweites geschlossenes Rohrelement und mehrere Bohrsegmente, die mit dem ersten und zweiten Rohrelement verbunden sind, umfasst. Zwischen dem ersten geschlossenen Rohrelement und dem zweiten geschlossenen Rohrelement entsteht ein Spalt, über den eine Kühl- und Spülflüssigkeit an die Bohrsegmente transportiert wird.

GB 1 583 860 A offenbart eine Bohrkrone mit einem Bohrschaft und mehreren Bohrsegmenten, die am Bohrschaft befestigt sind, wobei der Bohrschaft aus einem oder mehreren Blechteilen hergestellt wird. Die Idee der GB 1 583 860 A besteht darin, die Wandstärke des Bohrschaftes, die mit zunehmendem Durchmesser ebenfalls zunimmt, aus mehreren dünnen Blechteilen oder mehreren Blechlagen eines Blechteils zu erzeugen. Der Bohrschaft kann aus einem ersten Blechteil und einem zweiten Blechteil hergestellt werden, die zu einem ersten offenen Rohrelement und einem zweiten offenen Rohrelement umgeformt werden. Wenn das zweite offene Rohrelement den gewünschten Durchmesser aufweist, wird das erste offene Rohrelement im Bereich seiner Enden mit dem zweiten offenen Rohrelement verbunden und das zweite offene Rohrelement wird im Bereich seiner Enden mit dem ersten offenen Rohrelement verbunden.

### Darstellung der Erfindung

Die Aufgabe der vorliegenden Erfindung besteht darin, den aus der WO 2014/096359 A1 bekannten Schneidabschnitt für eine Bohrkrone dahingehend weiterzuentwickeln, dass das Risiko reduziert ist, dass sich der Schneidabschnitt beim Bohren in armiertem Beton im Untergrund verklemmt. Außerdem soll der Fertigungsaufwand bei der Herstellung des Schneidabschnittes reduziert werden.

Diese Aufgabe wird bei dem eingangs genannten Schneidabschnitt für eine Bohrkrone erfindungsgemäß durch die Merkmale des unabhängigen Anspruchs 1 gelöst. Vorteilhafte Weiterbildungen sind in den abhängigen Ansprüchen angegeben.

Der Schneidabschnitt ist für eine Bohrkrone vorgesehen und ist über eine lösbare Verbindungseinrichtung, die mindestens eine schlitzförmige Ausnehmung umfasst, mit einem Bohrschaftabschnitt der Bohrkrone verbindbar ausgebildet. Der Schneidabschnitt weist auf:
▪ ein erstes Rohrelement, das in Form eines ersten Hohlzylinders ausgebildet ist und das eine erste Hohlzylinderhöhe, einen ersten Innendurchmesser und einen ersten Aussendurchmesser aufweist,
▪ ein zweites geschlossenes Rohrelement, das in Form eines zweiten Hohlzylinders mit einer zweiten kreisringförmigen Querschnittsfläche ausgebildet ist und das eine zweite Hohlzylinderhöhe, einen zweiten Innendurchmesser und einen zweiten Aussendurchmesser, der kleiner als der zweite Innendurchmesser ist, aufweist, wobei das zweite geschlossene Rohrelement die mindestens eine schlitzförmige Ausnehmung aufweist, die mindestens eine schlitzförmige Ausnehmung einen Querschlitz und einen Verbindungsschlitz umfasst und der Verbindungsschlitz den Querschlitz mit der zweiten oberen Stirnfläche verbindet, und
▪ ein oder mehrere Bohrsegmente,
wobei das eine oder die mehreren Bohrsegmente mit dem ersten Rohrelement und dem zweiten geschlossenen Rohrelement verbunden sind und das zweite geschlossene Rohrelement die mindestens eine schlitzförmige Ausnehmung aufweist, wobei die mindestens eine schlitzförmige Ausnehmung einen Querschlitz und einen Verbindungsschlitz umfasst und der Verbindungsschlitz den Querschlitz mit der zweiten oberen Stirnfläche des zweiten geschlossenen Rohrelementes verbindet.

Erfindungsgemäß ist vorgesehen, dass das erste Rohrelement in das zweite geschlossene Rohrelement eingeschoben ist, das erste Rohrelement offen ausgebildet ist und der erste Hohlzylinder mit einer ersten wellenförmigen, trapezförmigen oder zickzackförmigen Querschnittsfläche ausgebildet ist.

Der erfindungsgemäße Schneidabschnitt umfasst ein erstes offenes Rohrelement, ein zweites geschlossenes Rohrelement und mindestens ein Bohrsegment. Das erste offene Rohrelement ist in Form eines ersten Hohlzylinders mit einer ersten wellenförmigen, trapezförmigen oder zickzackförmigen Querschnittsfläche ausgebildet und umfasst eine erste äussere Mantelfläche, eine erste innere Mantelfläche, eine erste untere Stirnfläche und eine erste obere Stirnfläche. Das zweite geschlossene Rohrelement ist in Form eines zweiten Hohlzylinders mit einer zweiten kreisringförmigen Querschnittsfläche ausgebildet und umfasst eine zweite äussere Mantelfläche, eine zweite innere Mantelfläche, eine zweite untere Stirnfläche und eine zweite obere Stirnfläche.

Um den Schneidabschnitt fertigzustellen, werden das erste offene Rohrelement und das zweite geschlossene Rohrelement ineinandergesteckt und das eine oder die mehreren Bohrsegmente werden mit dem ersten offenen Rohrelement und mit dem zweiten geschlossenen Rohrelement verbunden. Im Hinblick auf die Stabilität des Schneidabschnittes ist es vorteilhaft, wenn die Bohrsegmente mit dem ersten offenen Rohrelement und dem zweiten geschlossenen Rohrelement verbunden sind. Dabei können die Bohrsegmente mit dem ersten offenen Rohrelement und dem zweiten geschlossenen Rohrelement verschweißt, verlötet, verschraubt oder in einer anderen geeigneten Befestigungsart verbunden sein.

Durch die Trennung des Schneidabschnittes in das erste Rohrelement und das zweite Rohrelement kann eine Anpassung des Schneidabschnittes an die unterschiedlichen Anforderungen bezüglich Kraftübertragung, Drehmomentübertragung und Standfestigkeit gegenüber Zugbelastungen beim Entfernen einer verklemmten Bohrkrone berücksichtigt werden. Der Schneidabschnitt ist so aufgebaut, dass die Kraftübertragung von einem Bohrschaftabschnitt über das erste Rohrelement auf die Bohrsegmente und die Drehmomentübertragung vom Bohrschaftabschnitt über das zweite Rohrelement auf die Bohrsegmente erfolgt. Die erste obere Stirnfläche des ersten Rohrelementes bildet eine ringförmige Anschlagschulter, die zur Kraftübertragung verwendet wird. Der Bohrschaftabschnitt überträgt die Kraft mittels einer ringförmigen Stirnfläche auf die ringförmige Anschlagschulter. Die Drehmomentübertragung erfolgt beispielsweise über Stiftelemente des Bohrschaftabschnittes, die mit schlitzförmigen Ausnehmungen im zweiten Rohrelement zusammenwirken. Durch die Trennung des Schneidabschnittes in das erste offene Rohrelement und das zweite geschlossene Rohrelement können die unterschiedlichen Anforderungen an den Schneidabschnitt im Hinblick auf die Kraftübertragung und Drehmomentübertragung berücksichtigt werden.

Die mindestens eine schlitzförmige Ausnehmung ist Teil der lösbaren Verbindungseinrichtung, die den Schneidabschnitt mit einem Bohrschaftabschnitt der Bohrkrone verbindet. Die schlitzförmige Ausnehmung ist in T-Form oder L-Form ausgebildet und ermöglicht im verbundenen Zustand der Bohrkrone eine Relativbewegung zwischen dem Schneidabschnitt und dem Bohrschaftabschnitt. Durch die Relativbewegung zwischen dem Schneidabschnitt und dem Bohrschaftabschnitt kann ein verklemmter Schneidabschnitt aus dem Untergrund gelöst werden.

Durch die Trennung des Schneidabschnittes in das erste offene Rohrelement und das zweite geschlossene Rohrelement kann außerdem der Fertigungsaufwand für die Herstellung des Schneidabschnittes reduziert werden. Die erste obere Stirnfläche bildet die ringförmige Anschlagschulter für die Kraftübertragung, so dass eine Drehbearbeitung entfällt. Das erste Rohrelement und das zweite Rohrelement sind als Hohlzylinder ausgebildet und weisen konstante Materialstärken auf. Das erste Rohrelement kann aus einem ersten Profilblech hergestellt werden, das zu einem ersten offenen Rohrelement umgeformt wird. Das zweite Rohrelement kann aus einem zweiten ebenen Blechteil hergestellt werden, das zu einem zweiten offenen Rohrelement umgeformt wird und an zweiten Stosskanten stoffschlüssig oder formschlüssig verbunden wird.

Das erste offene Rohrelement hat den Vorteil, dass die erste äussere Mantelfläche des ersten offenen Rohrelementes mit der zweiten inneren Mantelfläche des zweiten offenen Rohrelementes in Kontakt steht. Wenn die erste äussere Mantelfläche und die zweite innere Mantelfläche in Kontakt sind, können die Bohrsegmente mit einer Schweißnaht mit dem ersten offenen Rohrelement und dem zweiten geschlossenen Rohrelement verbunden werden.

Das erste Rohrelement, das in Form eines ersten Hohlzylinders mit einer ersten wellenförmigen, trapezförmigen oder zickzackförmigen Querschnittsfläche ausgebildet ist, ermöglicht den Aufbau eines Schneidabschnittes ohne Innenüberstand oder mit einem geringen Innenüberstand der Bohrsegmente an der Innenseite des Schneidabschnittes, da über die Vertiefungen die Kühl- und Spülflüssigkeit in der benötigten Flüssigkeitsmenge an die Bearbeitungsstelle transportiert werden kann.

Bevorzugt sind die erste untere Stirnfläche des ersten offenen Rohrelementes und die zweite untere Stirnfläche des zweiten geschlossenen Rohrelementes bündig ausgerichtet. Die bündige Ausrichtung der ersten unteren Stirnfläche und der zweiten unteren Stirnfläche hat den Vorteil, dass eine breite Anbindungsfläche für die Bohrsegmente entsteht, an der die Bohrsegmente mit dem ersten offenen Rohrelement und dem zweiten geschlossenen Rohrelement verbunden werden können.

Besonders bevorzugt sind das eine oder die mehreren Bohrsegmente mit der ersten unteren Stirnfläche und der zweiten unteren Stirnfläche verbunden. Durch die bündige Ausrichtung der ersten unteren Stirnfläche und der zweiten unteren Stirnfläche entsteht eine breite Anbindungsfläche für die Bohrsegmente. Wenn die Bohrsegmente mit der ersten unteren Stirnfläche und der zweiten unteren Stirnfläche verbunden werden, können das erste offene Rohrelement und das zweite geschlossene Rohrelement gleichzeitig miteinander verbunden werden. Wenn die Bohrsegmente gleichzeitig mit dem ersten offenen Rohrelement und dem zweiten geschlossenen Rohrelement verbunden werden, kann der Fertigungsaufwand reduziert werden. Abhängig von den verwendeten Materialstärken kann es erforderlich sein, dass das erste offene Rohrelement und das zweite geschlossene Rohrelement zusätzlich miteinander verbunden werden. Sollten höhere Widerstandsmomente erforderlich sein, können das erste offene Rohrelement und das zweite geschlossene Rohrelement zusätzlich miteinander verbunden werden.

Besonders bevorzugt weist das zweite geschlossene Rohrelement in der zweiten inneren Mantelfläche mindestens eine Quernut auf, die auf Höhe des Verbindungsschlitzes der mindestens einen schlitzförmigen Ausnehmung angeordnet ist. Die mindestens eine Quernut ist Teil der lösbaren Verbindungseinrichtung, die den Schneidabschnitt mit einem Bohrschaftabschnitt der Bohrkrone verbindet. Die Breite der Quernut ist grösser oder gleich der Breite des Querschlitzes der schlitzförmigen Ausnehmung. In die Quernut des Schneidabschnittes greift eine passende Quernase eines Bohrschaftabschnittes ein. Die Quernut und Quernase bilden eine zusätzliche formschlüssige Verbindung, die verhindert, dass die Steck-Dreh-Verbindung beim Lösen einer verklemmten Bohrkrone unbeabsichtigt geöffnet wird und der Bohrschaftabschnitt ohne Schneidabschnitt aus dem Untergrund entfernt wird.

In einer bevorzugten Weiterentwicklung ist das erste offene Rohrelement aus einem ersten Material und das zweite geschlossene Rohrelement aus einem zweiten Material ausgebildet. Der erfindungsgemäße Schneidabschnitt ist so aufgebaut, dass die Kraftübertragung auf den Schneidabschnitt über das erste Rohrelement und die Drehmomentübertragung auf den Schneidabschnitt über das zweite Rohrelement erfolgt. Durch die Trennung des Schneidabschnittes in das erste Rohrelement und das zweite Rohrelement kann die Auswahl des ersten Materials und des zweiten Materials an die unterschiedlichen Anforderungen an den Schneidabschnitt im Hinblick auf die Kraftübertragung und Drehmomentübertragung angepasst werden. Außerdem kann das zweite Material im Hinblick auf Zugbelastungen beim Entfernen einer verklemmten Bohrkrone angepasst werden.

Bevorzugt ist das erste offene Rohrelement als erstes umgeformtes Blechteil ausgebildet. Die Verwendung eines ersten umgeformten Blechteils ermöglicht die Herstellung des ersten offenen Rohrelementes aus Profilblechen. Das erste offene Rohrelement kann aus einem ersten Profilblech hergestellt werden, das zu einem ersten offenen Rohrelement umgeformt wird. Als Umformverfahren für das erste Blechteil eignen sich Kaltumformverfahren und Warmumformverfahren.

Bevorzugt ist das zweite geschlossene Rohrelement als zweites umgeformtes Blechteil ausgebildet. Die Verwendung eines zweiten umgeformten Blechteils ermöglicht die Herstellung des zweiten geschlossenen Rohrelementes aus ebenen Blechteilen. Das zweite geschlossene Rohrelement kann aus einem zweiten Blechteil hergestellt werden, das zu einem zweiten offenen Rohrelement umgeformt wird und an den zweiten Stosskanten verbunden wird. Die mindestens eine schlitzförmige Ausnehmung kann im zweiten Blechteil beispielsweise durch Stanzen oder Ausschneiden erzeugt werden. Als Umformverfahren für das zweite Blechteil eignen sich Kaltumformverfahren und Warmumformverfahren. Die Verbindung der zweiten Stosskanten kann stoffschlüssig oder formschlüssig erfolgen, wobei die Stosskanten von Rohrelementen üblicherweise stoffschlüssig durch Schweißen verbunden werden. Neben der stoffschlüssigen Verbindung können die zweiten Stosskanten formschlüssig verbunden werden.

Besonders bevorzugt weist das zweite umgeformte Blechteil an gegenüberliegenden Seiten mindestens ein zweites positives Formschlusselement und mindestens ein entsprechendes zweites negatives Formschlusselement auf, wobei das mindestens eine zweite positive Formschlusselement und das mindestens eine zweite negative Formschlusselement beim zweiten geschlossenen Rohrelement formschlüssig verbunden sind. Die Verbindung der zweiten Stosskanten über zweite Formschlusselemente hat den Vorteil, dass kein Wärmeeintrag in das zweite offene Rohrelement erfolgt, der zu Spannungen im zweiten geschlossenen Rohrelement führen kann.

Der erfindungsgemäße Schneidabschnitt für eine Bohrkrone ist für eine Verbindung mit einem Bohrschaftabschnitt der Bohrkrone vorgesehen. Die Erfindung betrifft weiterhin eine Bohrkrone mit einem Schneidabschnitt und einem Bohrschaftabschnitt, wobei der Schneidabschnitt und der Bohrschaftabschnitt über eine lösbare Verbindungseinrichtung verbindbar sind.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können.

Der Einfachheit halber sind nachfolgend für identische oder ähnliche Teile oder Teile mit identischer oder ähnlicher Funktion gleiche Bezugszeichen verwendet. Es zeigen:
- FIGN. 1A,: B eine Bohrkrone mit einem erfindungsgemäßen Schneidabschnitt und einem Bohrschaftabschnitt, die über eine lösbare Verbindungseinrichtung verbindbar sind, in einem unverbundenen Zustand der Bohrkrone (FIG. 1A) und in einem verbundenen Zustand der Bohrkrone (FIG. 1B); und
- FIGN. 2A-C: den erfindungsgemäßen Schneidabschnitt der FIG. 1 bestehend aus einem ersten offenen Rohrelement, einem zweiten geschlossenen Rohrelement und mehreren Bohrsegmenten in einem Längsschnitt entlang der Schnittlinie A-A in FIG. 1A.

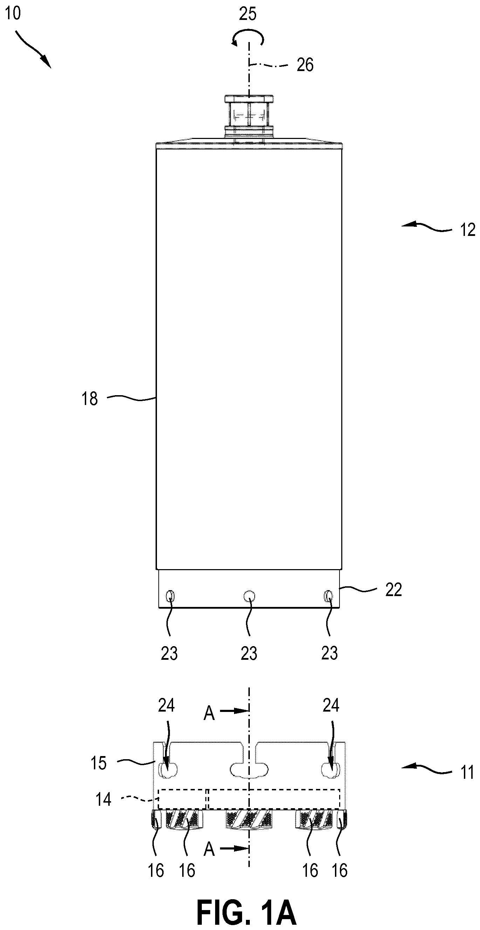

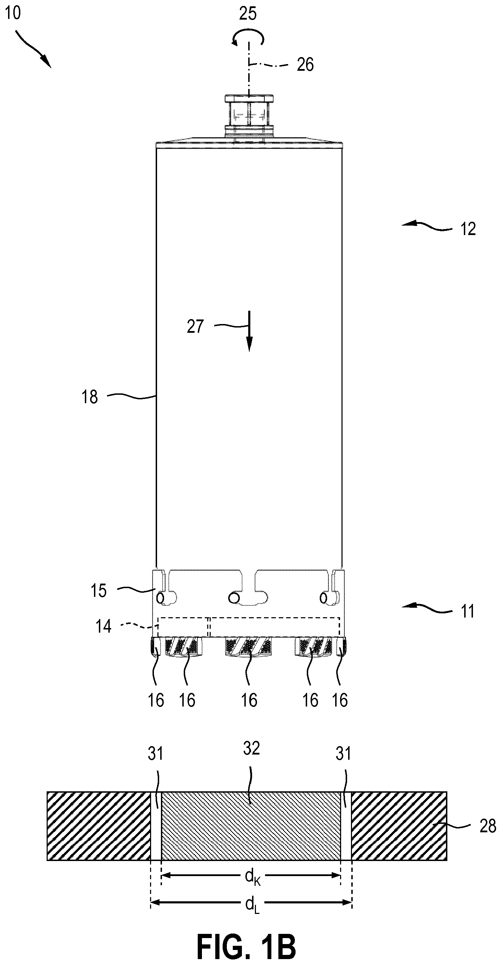

**FIGN. 1A****, B** zeigen eine Bohrkrone **10,** die einen erfindungsgemäßen Schneidabschnitt **11** und einen Bohrschaftabschnitt **12** umfasst, wobei der Schneidabschnitt 11 und der Bohrschaftabschnitt 12 über eine lösbare Verbindungseinrichtung **13** verbindbar sind. Dabei zeigt FIG. 1A den Schneidabschnitt 11 und Bohrschaftabschnitt 12 in einem unverbundenen Zustand der Bohrkrone und FIG. 1B zeigt den Schneidabschnitt 11 und Bohrschaftabschnitt 12 in einem verbundenen Zustand der Bohrkrone.

Der Schneidabschnitt 11 umfasst ein erstes offenes Rohrelement **14,** ein zweites geschlossenes Rohrelement **15** und mehrere Bohrsegmente **16,** die mit dem ersten geschlossenen Rohrelement 14 verbunden sind. Die Bohrsegmente 16 sind ringförmig angeordnet und bilden einen Bohrring mit Zwischenräumen. Der Schneidabschnitt 11 kann anstatt mehrerer Bohrsegmente 16 auch ein einzelnes Bohrsegment aufweisen, das in Form eines geschlossenen Bohrringes ausgebildet ist. Die Bohrsegmente 16 sind mit dem ersten offenen Rohrelement 14 und dem zweiten geschlossenen Rohrelement 15 verschweißt, verlötet, verschraubt oder in einer anderen geeigneten Befestigungsart am ersten geschlossenen Rohrelement 14 befestigt. Der Bohrschaftabschnitt 12 umfasst einen rohrförmigen Bohrschaft **17,** einen Deckel **18** und ein Einsteckende **19,** über das die Bohrkrone 10 in einer Werkzeugaufnahme eines Kernbohrgerätes befestigt wird.

Die lösbare Verbindungseinrichtung 13 ist in Form einer kombinierten Steck-Dreh-Verbindung ausgebildet, wie sie in WO 2014/096359 A1 offenbart ist. Die lösbare Verbindungseinrichtung 13 umfasst ein erstes Steckelement **21,** das in den Schneidabschnitt 11 integriert ist, und ein zweites Steckelement **22,** das in den Bohrschaftabschnitt 12 integriert ist.

Das erste und zweite Steckelement 21, 22 bilden eine Steckverbindung und werden zusätzlich über eine Drehverbindung gesichert. Die Drehverbindung umfasst mehrere Stiftelemente **23,** die in schlitzförmige Ausnehmungen **24** eingeführt werden. Die Stiftelemente 23 sind an einer Außenseite des zweiten Steckelementes 22 befestigt und die schlitzförmigen Ausnehmungen 24 sind im ersten Steckelement 21 vorgesehen. Der Schneidabschnitt 11 lässt sich vom Bediener einfach und schnell mit dem Bohrschaftabschnitt 12 verbinden. Dazu wird der Schneidabschnitt 11 mit dem ersten Steckelement 21 so auf das zweite Steckelement 22 des Bohrschaftabschnittes 12 gesteckt, dass die Stiftelemente 23 in den schlitzförmigen Ausnehmungen 24 angeordnet sind.

Im Bohrbetrieb wird die Bohrkrone 10 von einem Kernbohrgerät in einer Drehrichtung **25** um eine Drehachse **26** angetrieben, wobei die Drehachse 26 mit einer Längsachse des rohrförmigen Bohrschaftes 17 zusammenfällt. Während der Drehung der Bohrkrone 10 um die Drehachse 26 wird die Bohrkrone 10 entlang einer Vorschubrichtung **27** in ein Werkstück **28** bewegt, wobei die Vorschubrichtung 27 parallel zur Drehachse 26 verläuft. Die Bohrkrone 10 erzeugt im Werkstück 28 ein Bohrloch **31** mit einem Bohrlochdurchmesser **d_{L}** und einen Bohrkern **32** mit einem Kerndurchmesser **d_{K}**. Die Bohrsegmente 15 bilden einen Bohrring mit einem Außendurchmesser, der dem Bohrlochdurchmesser d_{L}. entspricht, und einem Innendurchmesser, der dem Kerndurchmesser d_{K} entspricht.

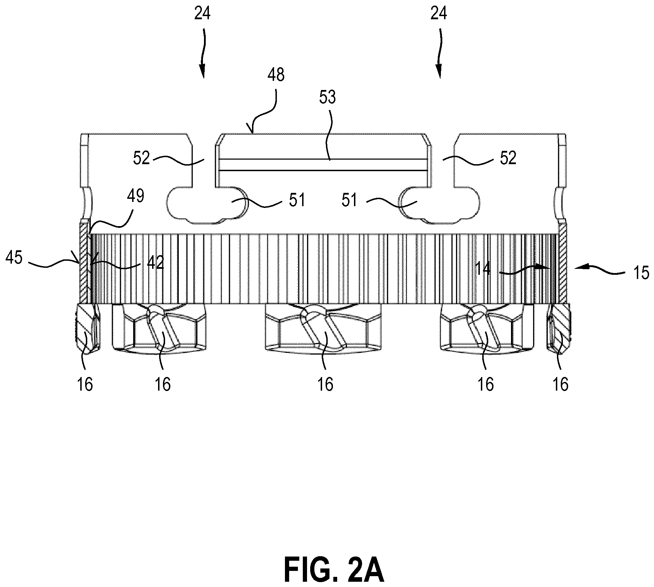

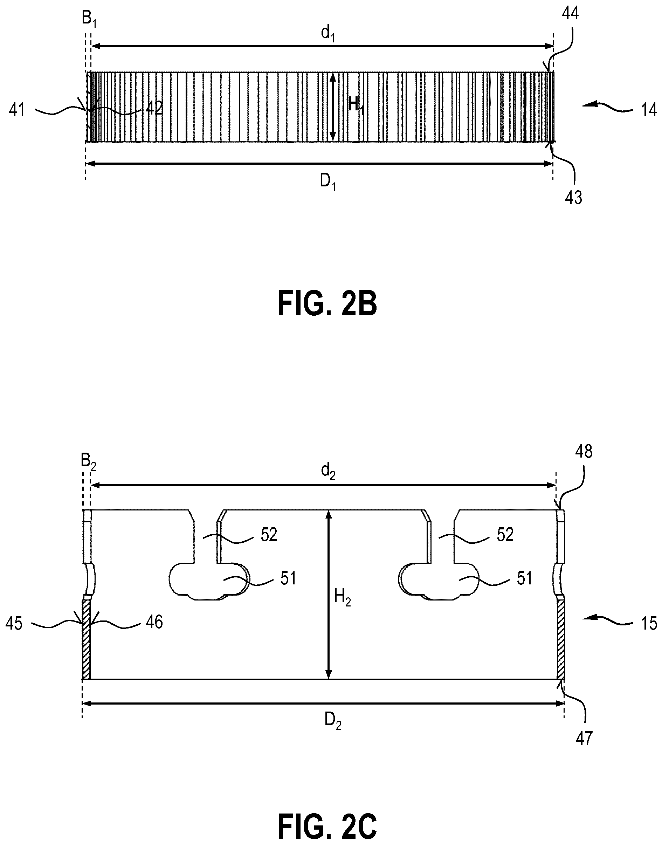

FIGN. 2A-C zeigen den erfindungsgemäßen Schneidabschnitt 11 der FIG. 1 mit dem ersten offenen Rohrelement 14, dem zweiten geschlossenen Rohrelement 15 und den Bohrsegmenten 16 in einem Längsschnitt entlang der Schnittlinie A-A in FIG. 1A. FIG. 2B zeigt das erste offene Rohrelement 14 und FIG. 2C das zweite geschlossene Rohrelement 15 des Schneidabschnittes 11.

Der Schneidabschnitt 11 wird aus dem ersten offenen Rohrelement 14, dem zweiten geschlossenen Rohrelement 15 und den Bohrsegmenten 16 hergestellt. Die Bohrsegmente 16 werden mit dem ersten offenen Rohrelement 14 und dem zweiten geschlossenen Rohrelement 15 verbunden. Dabei können die Bohrsegmente 16 mit dem ersten offenen Rohrelement 14 und dem zweiten geschlossenen Rohrelement 14, 15 verschweißt, verlötet, verschraubt oder in einer anderen geeigneten Befestigungsart befestigt werden.

Das erste offene Rohrelement 14 ist in Form eines ersten Hohlzylinders mit einer ersten wellenförmigen Querschnittsfläche ausgebildet; alternativ zur wellenförmigen Querschnittsfläche können trapezförmige oder zickzackförmige Querschnittsflächen eingesetzt werden. Das erste offene Rohrelement 14 umfasst eine erste äussere Mantelfläche **41,** eine erste innere Mantelfläche **42,** eine erste untere Stirnfläche **43** und eine erste obere Stirnfläche **44.** Die Abmessungen des ersten offenen Rohrelementes 14 sind durch eine erste Hohlzylinderhöhe **H₁,** einen ersten Innendurchmesser **d₁** und einen ersten Aussendurchmesser **D₁** definiert. Die Breite des ersten offenen Rohrelementes 14 ergibt sich als halbe Differenz des ersten Aussendurchmessers D₁ und des ersten Innendurchmessers d₁ und wird als erste Breite **B₁** bezeichnet. Als erster Innendurchmesser d₁ ist der Durchmesser eines Innenkreises definiert und als erster Aussendurchmesser D₁ ist der Durchmesser eines Aussenkreises definiert.

Das zweite geschlossene Rohrelement 15 in Form eines zweiten Hohlzylinders mit einer kreisringförmigen Querschnittsfläche ausgebildet. Das zweite geschlossene Rohrelement 15 umfasst eine zweite äussere Mantelfläche **45,** eine zweite innere Mantelfläche **46,** eine zweite untere Stirnfläche **47** und eine zweite obere Stirnfläche **48.** Die Abmessungen des zweiten geschlossenen Rohrelementes 15 sind durch eine zweite Hohlzylinderhöhe **H₂**, einen zweiten Innendurchmesser **d₂** und einen zweiten Aussendurchmesser **D₂** definiert. Die Breite des zweiten geschlossenen Rohrelementes 15 ergibt sich als halbe Differenz des zweiten Aussendurchmessers D₂ und des zweiten Innendurchmessers d₂ und wird als zweite Breite **B₂** bezeichnet.

Die erste untere Stirnfläche 43 des ersten offenen Rohrelementes 14 und die zweite untere Stirnfläche 47 des zweiten geschlossenen Rohrelementes 15 sind bündig ausgerichtet. Die bündige Ausrichtung der ersten unteren Stirnfläche 43 und der zweiten unteren Stirnfläche 47 hat den Vorteil, dass eine breite Anbindungsfläche für die Bohrsegmente 16 entsteht, an der die Bohrsegmente 16 mit dem ersten offenen Rohrelement 14 und dem zweiten geschlossenen Rohrelement 15 verbunden werden können. Wenn die Bohrsegmente 16 mit der ersten unteren Stirnfläche 43 und der zweiten unteren Stirnfläche 47 verbunden werden, können das erste offene Rohrelement 14 und das zweite geschlossene Rohrelement 15 gleichzeitig miteinander verbunden werden. Abhängig von den verwendeten Materialstärken kann es erforderlich sein, dass das erste offene Rohrelement 14 und das zweite geschlossene Rohrelement 15 zusätzlich miteinander verbunden werden.

Der Schneidabschnitt 11 ist so aufgebaut, dass die Kraftübertragung vom Bohrschaftabschnitt 12 auf den Schneidabschnitt 11 über das erste Rohrelement 14 erfolgt und die Drehmomentübertragung vom Bohrschaftabschnitt 12 auf den Schneidabschnitt 11 über das zweite Rohrelement 15 erfolgt. Die erste obere Stirnfläche 44 des ersten Rohrelementes 14 bildet an der Innenseite des Schneidabschnittes 11 eine ringförmige Anschlagschulter **49** für die Kraftübertragung von einem verbundenen Bohrschaftabschnitt. Die Drehmomentübertragung vom Bohrschaftabschnitt 12 auf den Schneidabschnitt 11 erfolgt über die Stiftelemente 23 und die schlitzförmigen Ausnehmungen 24. Das zweite geschlossene Rohrelement 15 des Schneidabschnittes 11 weist an der zweiten oberen Stirnfläche 48 mehrere schlitzförmige Ausnehmungen 24 auf. Die schlitzförmigen Ausnehmungen 24 umfassen jeweils einen Querschlitz **51** und einen Verbindungsschlitz **52,** wobei der Verbindungsschlitz 52 den Querschlitz 51 mit der zweiten oberen Stirnfläche 48 verbindet.

Das erste Rohrelement 14 kann aus einem ersten Material und das zweite Rohrelement 15 aus einem zweiten Material hergestellt werden. Durch die Trennung des Schneidabschnittes 11 in das erste offene Rohrelement 14 und das zweite geschlossene Rohrelement 15 kann die Auswahl des ersten Materials und des zweiten Materials an die unterschiedlichen Anforderungen des ersten offenen Rohrelementes 14 und des zweiten geschlossenen Rohrelementes 15 angepasst werden.

## Patentansprüche

1. Schneidabschnitt (11) für eine Bohrkrone (10), wobei der Schneidabschnitt (11) mit einem Bohrschaftabschnitt (12) der Bohrkrone (10) über eine lösbare Verbindungseinrichtung (13), die mindestens eine schlitzförmige Ausnehmung (24) umfasst, verbindbar ist, aufweisend:
▪ ein erstes Rohrelement (14), das in Form eines ersten Hohlzylinders ausgebildet ist und das eine erste Hohlzylinderhöhe (H₁), einen ersten Innendurchmesser (d₁) und einen ersten Aussendurchmesser (D₁) aufweist,
▪ ein zweites geschlossenes Rohrelement (15), das in Form eines zweiten Hohlzylinders mit einer zweiten kreisringförmigen Querschnittsfläche ausgebildet ist und das eine zweite Hohlzylinderhöhe (H₂), einen zweiten Innendurchmesser (d₂) und einen zweiten Aussendurchmesser (D₂) aufweist, und
▪ ein oder mehrere Bohrsegmente (16),
wobei das eine oder die mehreren Bohrsegmente (16) mit dem ersten Rohrelement (14) und dem zweiten geschlossenen Rohrelement (15) verbunden sind und das zweite geschlossene Rohrelement (15) die mindestens eine schlitzförmige Ausnehmung (24) aufweist, wobei die mindestens eine schlitzförmige Ausnehmung (24) einen Querschlitz (51) und einen Verbindungsschlitz (52) umfasst und der Verbindungsschlitz (52) den Querschlitz (51) mit der zweiten oberen Stirnfläche (48) des zweiten geschlossenen Rohrelementes (15) verbindet,
**dadurch gekennzeichnet, dass** der erste Aussendurchmesser (D₁) kleiner als der zweite Innendurchmesser (d₂) ist,
dass das erste Rohrelement (14) in das zweite geschlossene Rohrelement (15) eingeschoben ist,
dass das erste Rohrelement (14) offen ausgebildet ist und dass der erste Hohlzylinder mit einer ersten wellenförmigen, trapezförmigen oder zickzackförmigen Querschnittsfläche ausgebildet ist.

2. Schneidabschnitt nach Anspruch 1, **dadurch gekennzeichnet, dass** eine erste untere Stirnfläche (43) des ersten offenen Rohrelementes (14) und eine zweite untere Stirnfläche (47) des zweiten geschlossenen Rohrelementes (15) bündig ausgerichtet sind.

3. Schneidabschnitt nach Anspruch 2, **dadurch gekennzeichnet, dass** das eine oder die mehreren Bohrsegmente (16) mit der ersten unteren Stirnfläche (43) und der zweiten unteren Stirnfläche (47) verbunden sind.

4. Schneidabschnitt nach Anspruch 1, **dadurch gekennzeichnet, dass** das zweite geschlossene Rohrelement (15) in der zweiten inneren Mantelfläche (46) mindestens eine Quernut (53) aufweist, die auf Höhe des Verbindungsschlitzes (52) der mindestens einen schlitzförmigen Ausnehmung (24) angeordnet ist.

5. Schneidabschnitt nach einem der Ansprüche 1 bis 4, **dadurch gekennzeichnet, dass** das erste offene Rohrelement (14) aus einem ersten Material und das zweite geschlossene Rohrelement (15) aus einem zweiten Material ausgebildet ist.

6. Schneidabschnitt nach einem der Ansprüche 1 bis 5, **dadurch gekennzeichnet, dass** das erste offene Rohrelement (14) als erstes umgeformtes Blechteil ausgebildet ist.

7. Schneidabschnitt nach einem der Ansprüche 1 bis 5, **dadurch gekennzeichnet, dass** das zweite offene Rohrelement (15) als zweites umgeformtes Blechteil ausgebildet ist.

8. Schneidabschnitt nach Anspruch 7, **dadurch gekennzeichnet, dass** das zweite umgeformte Blechteil an gegenüberliegenden Seiten mindestens ein zweites positives Formschlusselement und mindestens ein entsprechendes zweites negatives Formschlusselement aufweist, wobei das mindestens eine zweite positive Formschlusselement und das mindestens eine zweite negative Formschlusselement beim zweiten geschlossenen Rohrelement formschlüssig verbunden sind.

9. Bohrkrone (10) mit einem Schneidabschnitt (11) nach einem der Ansprüche 1 bis 8 und einem Bohrschaftabschnitt (12), wobei der Schneidabschnitt (11) und der Bohrschaftabschnitt (12) über eine lösbare Verbindungseinrichtung (13) verbindbar sind.

## Claims

1. Cutting section (11) for a drill bit (10), wherein the cutting section (11) is connectable to a drill shaft section (12) of the drill bit (10) via a releasable connecting device (13) which comprises at least one slot-shaped recess (24), having:
▪ a first tubular element (14) which is in the form of a first hollow cylinder and which has a first hollow cylinder height (H₁), a first inside diameter (d₁) and a first outside diameter (D₁),
▪ a second closed tubular element (15) which is in the form of a second hollow cylinder having a second circular ring-shaped cross-sectional area and which has a second hollow cylinder height (H₂), a second inside diameter (d₂) and a second outside diameter (D₂), and
▪ one or more drill segments (16),
wherein the one or the more drill segments (16) are connected to the first tubular element (14) and to the second closed tubular element (15), and the second closed tubular element (15) has the at least one slot-shaped recess (24), wherein the at least one slot-shaped recess (24) comprises a transverse slot (51) and a connecting slot (52), and the connecting slot (52) connects the transverse slot (51) to the second upper end surface (48) of the second closed tubular element (15),
**characterized in that** the first outside diameter (D₁) is smaller than the second inside diameter (d₂), **in that** the first tubular element (14) is pushed into the second closed tubular element (15), **in that** the first tubular element (14) is open, and **in that** the first hollow cylinder is formed with a waved, trapezoidal or zigzag-shaped cross-sectional area.

2. Cutting section according to Claim 1, **characterized in that** a first lower end surface (43) of the first open tubular element (14) and a second lower end surface (47) of the second closed tubular element (15) are aligned flush.

3. Cutting section according to Claim 2, **characterized in that** the one or the more drill segments (16) are connected to the first lower end surface (43) and to the second lower end surface (47).

4. Cutting section according to Claim 1, **characterized in that** the second closed tubular element (15) in the second inner lateral surface (46) has at least one transverse groove (53) which is arranged level with the connecting slot (52) of the at least one slot-shaped recess (24).

5. Cutting section according to one of Claims 1 to 4, **characterized in that** the first open tubular element (14) is formed from a first material and the second closed tubular element (15) from a second material.

6. Cutting section according to one of Claims 1 to 5, **characterized in that** the first open tubular element (14) is in the form of a first formed sheet metal part.

7. Cutting section according to one of Claims 1 to 5, **characterized in that** the second open tubular element (15) is in the form of a second formed sheet metal part.

8. Cutting section according to Claim 7, **characterized in that** the second formed sheet metal part has at least one second positive form-fitting element and at least one corresponding second negative form-fitting element on opposite sides, wherein the at least one second positive form-fitting element and the at least one second negative form-fitting element are connected in a form-fitting manner in the second closed tubular element.

9. Drill bit (10) with a cutting section (11) according to one of Claims 1 to 8 and a drill shaft section (12), wherein the cutting section (11) and the drill shaft section (12) are connectable via a releasable connecting device (13).

## Revendications

1. Section de coupe (11) pour une couronne de perçage (10), la section de coupe (11) pouvant être reliée à une section de tige de perçage (12) de la couronne de perçage (10) par l'intermédiaire d'un dispositif de liaison amovible (13) qui comprend au moins un évidement en forme de fente (24), présentant :
- un premier élément tubulaire (14) qui est réalisé sous la forme d'un premier cylindre creux et qui présente une première hauteur de cylindre creux (H₁), un premier diamètre intérieur (d₁) et un premier diamètre extérieur (D₁),
- un deuxième élément tubulaire fermé (15), qui est réalisé sous la forme d'un deuxième cylindre creux avec une deuxième surface de section transversale en forme d'anneau circulaire et qui présente une deuxième hauteur de cylindre creux (H₂), un deuxième diamètre intérieur (d₂) et un deuxième diamètre extérieur (D₂), et
- un ou plusieurs segments de perçage (16),
le ou les segments de perçage (16) étant reliés au premier élément tubulaire (14) et au deuxième élément tubulaire fermé (15), et le deuxième élément tubulaire fermé (15) présentant l'au moins un évidement en forme de fente (24), l'au moins un évidement en forme de fente (24) comprenant une fente transversale (51) et une fente de liaison (52), et la fente de liaison (52) reliant la fente transversale (51) à la deuxième surface d'extrémité supérieure (48) du deuxième élément tubulaire fermé (15),
**caractérisée en ce que** le premier diamètre extérieur (D₁) est inférieur au deuxième diamètre intérieur (d₂),
**en ce que** le premier élément tubulaire (14) est inséré dans le deuxième élément tubulaire fermé (15),
**en ce que** le premier élément tubulaire (14) est réalisé sous forme ouverte et
**en ce que** le premier cylindre creux est réalisé avec une première surface de section transversale ondulée, trapézoïdale ou en zigzag.

2. Section de coupe selon la revendication 1, **caractérisée en ce qu'**une première surface d'extrémité inférieure (43) du premier élément tubulaire ouvert (14) et une deuxième surface d'extrémité inférieure (47) du deuxième élément tubulaire fermé (15) sont alignées.

3. Section de coupe selon la revendication 2, **caractérisée en ce que** le ou les segments de perçage (16) sont reliés à la première surface d'extrémité inférieure (43) et à la deuxième surface d'extrémité inférieure (47).

4. Section de coupe selon la revendication 1, **caractérisée en ce que** le deuxième élément tubulaire fermé (15) présente dans la deuxième surface d'enveloppe intérieure (46) au moins une rainure transversale (53) qui est agencée à la hauteur de la fente de liaison (52) de l'au moins un évidement en forme de fente (24).

5. Section de coupe selon l'une quelconque des revendications 1 à 4, **caractérisée en ce que** le premier élément tubulaire ouvert (14) est réalisé dans un premier matériau et le deuxième élément tubulaire fermé (15) est réalisé dans un deuxième matériau.

6. Section de coupe selon l'une quelconque des revendications 1 à 5, **caractérisée en ce que** le premier élément tubulaire ouvert (14) est réalisé sous forme de première pièce de tôle mise en forme.

7. Section de coupe selon l'une quelconque des revendications 1 à 5, **caractérisée en ce que** le deuxième élément tubulaire ouvert (15) est réalisé sous forme de deuxième pièce de tôle mise en forme.

8. Section de coupe selon la revendication 7, **caractérisée en ce que** la deuxième pièce en tôle mise en forme comprend, sur des côtés opposés, au moins un deuxième élément de complémentarité de forme positif et au moins un deuxième élément de complémentarité de forme négatif correspondant, l'au moins un deuxième élément de complémentarité de forme positif et l'au moins un deuxième élément de complémentarité de forme négatif étant reliés par complémentarité de forme dans le deuxième élément tubulaire fermé.

9. Couronne de perçage (10) avec une section de coupe (11) selon l'une quelconque des revendications 1 à 8 et une section de tige de perçage (12), la section de coupe (11) et la section de tige de perçage (12) pouvant être reliées par l'intermédiaire d'un dispositif de liaison amovible (13).
